# EUROPÄISCHE PATENTSCHRIFT

(11) **EP 2 619 841 B1**
(45) Veröffentlichungstag und Bekanntmachung des Hinweises auf die Patenterteilung: **28.05.2014**
(21) Anmeldenummer: 11751576.7
(22) Anmeldetag: 12.08.2011
(51) Int. Cl.: H01M 10/44, B60L 11/18, H02J 7/00

(54) **VERFAHREN ZUR INBETRIEBNAHME EINES BATTERIESYSTEMS MIT EINEM GLEICHSPANNUNGSZWISCHENKREIS**
METHOD FOR STARTING UP A BATTERY SYSTEM HAVING A DC VOLTAGE INTERMEDIATE CIRCUIT
PROCÉDÉ DE MISE EN SERVICE D'UN SYSTÈME DE BATTERIES DOTÉ D'UN CONVERTISSEUR INDIRECT DE TENSION CONTINUE

(30) Priorität: 20.09.2010 DE 102010041029
(43) Veröffentlichungstag der Anmeldung: 31.07.2013
(73) Patentinhaber: Samsung SDI Co., Ltd., Gyeonggi-do (KR); Robert Bosch GmbH, 70442 Stuttgart (DE)
(72) Erfinder: BUTZMANN, Stefan, 71717 Beilstein (DE); FINK, Holger, 70567 Stuttgart (DE)
(74) Vertreter: Bee, Joachim
(86) Internationale Anmeldenummer: PCT/EP2011/063965
(87) Internationale Veröffentlichungsnummer: WO 2012/038153

(56) Entgegenhaltungen:
- EP-A1- 2 061 116
- US-A- 6 140 799
- US-A1- 2008 054 870
- US-A1- 2008 197 810

## Beschreibung

Die vorliegende Erfindung betrifft ein Verfahren zur Inbetriebnahme eines Batteriesystems mit einem Gleichspannungszwischenkreis sowie eine Batterie und ein Batteriesystem mit einem Gleichspannungszwischenkreis, welche ausgebildet sind, das Verfahren zur Inbetriebnahme auszuführen.

### Stand der Technik

Es zeichnet sich ab, dass in Zukunft sowohl bei stationären Anwendungen als auch bei Fahrzeugen wie Hybrid- und Elektrofahrzeugen vermehrt Batteriesysteme zum Einsatz kommen werden. Um die für eine jeweilige Anwendung gegebenen Anforderungen an Spannung und zur Verfügung stellbare Leistung erfüllen zu können, werden eine hohe Zahl von Batteriezellen in Serie geschaltet. Da der von einer solchen Batterie bereitgestellte Strom durch alle Batteriezellen fließen muss und eine Batteriezelle nur einen begrenzten Strom leiten kann, werden oft zusätzlich Batteriezellen parallel geschaltet, um den maximalen Strom zu erhöhen. Dies kann entweder durch Vorsehen von mehreren Zellwickeln innerhalb eines Batteriezellengehäuses oder durch externes Verschalten von Batteriezellen geschehen.

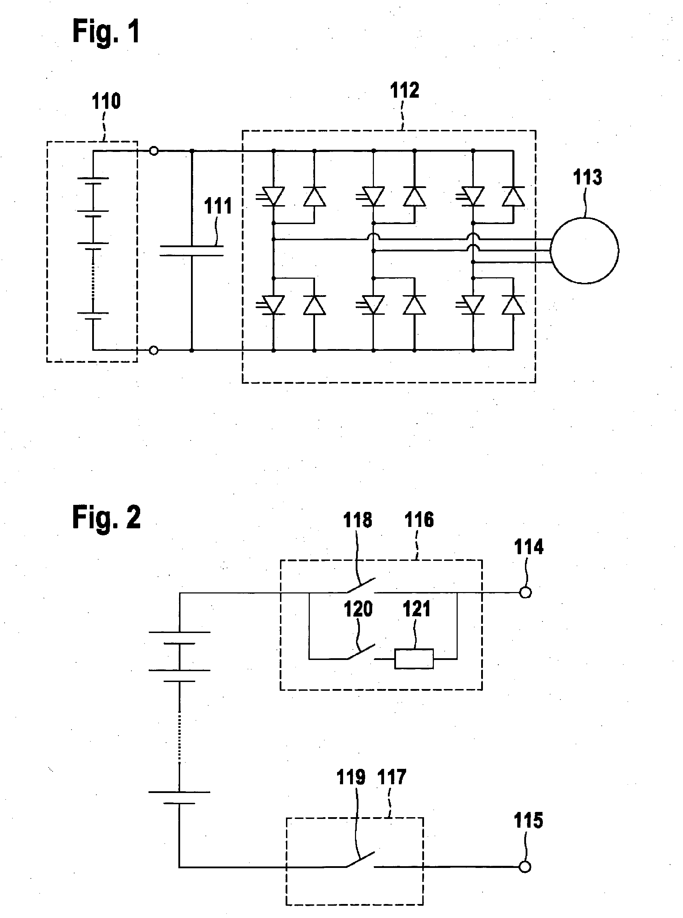

Das Prinzipschaltbild eines üblichen elektrischen Antriebssystems, wie es beispielsweise in Elektro- und Hybrid-Fahrzeugen oder auch in stationären Anwendungen wie bei der Rotorblattverstellung von Windkraftanlagen zum Einsatz kommt, ist in Figur 1 dargestellt. Eine Batterie 110 ist an einen Gleichspannungszwischenkreis angeschlossen, welcher durch einen Kondensator 111 gebildet wird. An den Gleichspannungszwischenkreis angeschlossen ist ein Pulswechselrichter 112, der über jeweils zwei schaltbare Halbleiterventile und zwei Dioden an drei Ausgängen gegeneinander phasenversetzte Sinusspannungen für den Betrieb eines elektrischen Antriebsmotors 113 bereitstellt. Die Kapazität des Kondensators 111, der den Gleichspannungszwischenkreis bildet, muss groß genug sein, um die Spannung im Gleichspannungszwischenkreis für eine Zeitdauer, in der eines der schaltbaren Halbleiterventile durchgeschaltet wird, zu stabilisieren. In einer praktischen Anwendung wie einem Elektrofahrzeug ergibt sich eine hohe Kapazität im Bereich bis zu einigen mF.

Figur 2 zeigt die Batterie 110 der Figur 1 in einem detaillierteren Blockschaltbild. Eine Vielzahl von Batteriezellen sind in Serie sowie optional zusätzlich parallel geschaltet, um eine für eine jeweilige Anwendung gewünschte hohe Ausgangsspannung und Batteriekapazität zu erreichen. Zwischen den Pluspol der Batteriezellen und ein positives Batterieterminal 114 ist eine Lade- und Trenneinrichtung 116 geschaltet. Optional kann zusätzlich zwischen den Minuspol der Batteriezellen und ein negatives Batterieterminal 115 eine Trenneinrichtung 117 geschaltet werden. Die Trenn- und Ladeeinrichtung 116 und die Trenneinrichtung 117 umfassen jeweils ein Schütz 118 beziehungsweise 119, welche dafür vorgesehen sind, die Batteriezellen von den Batterieterminals abzutrennen, um die Batterieterminals spannungsfrei zu schalten. Aufgrund der hohen Gleichspannung der seriengeschalteten Batteriezellen ist andernfalls erhebliches Gefährdungspotential für Wartungspersonal oder dergleichen gegeben. In der Lade- und Trenneinrichtung 116 ist zusätzlich ein Ladeschütz 120 mit einem zu dem Ladeschütz 120 in Serie geschalteten Ladewiderstand 121 vorgesehen. Der Ladewiderstand 121 begrenzt einen Aufladestrom für den Kondensator 111, wenn die Batterie an den Gleichspannungszwischenkreis angeschlossen wird. Hierzu wird zunächst das Schütz 118 offen gelassen und nur der Ladeschütz 120 geschlossen. Erreicht die Spannung am positiven Batterieterminal 114 die Spannung der Batteriezellen, kann das Schütz 119 geschlossen und gegebenenfalls das Ladeschütz 120 geöffnet werden.

Das Ladeschütz 120 und der Ladewiderstand 121 stellen in Anwendungen, die eine Leistung im Bereich einiger 10 kW aufweisen, bedeutenden Mehraufwand dar, der lediglich für den einige hundert Millisekunden dauernden Ladevorgang des Gleichspannungszwischenkreises benötigt wird. Die genannten Komponenten sind nicht nur teuer, sondern auch groß und schwer, was besonders für den Einsatz in mobilen Anwendungen wie elektrischen Kraftfahrzeugen störend ist.

Batteriesysteme, die aus mehreren Batteriemodulen bestehen und eine Einstellung der angegebenen Spannung ermöglichen, sind aus den Druckschriften EP 2 061 116 A1, US 6,140,799 und US 2008/0054870 A1 bekannt.

### Offenbarung der Erfindung

Erfindungsgemäß wird daher ein Verfahren zur Inbetriebnahme eines Batteriesystems mit einer Batterie, einem mit der Batterie verbundenen Gleichspannungszwischenkreis und einem mit dem Gleichspannungszwischenkreis verbundenen Antriebssystem eingeführt. Die Batterie umfasst eine Mehrzahl von in Serie geschalteten Batteriemodulen, welche jeweils eine Koppeleinheit und wenigstens eine zwischen einen ersten Eingang und einen zweiten Eingang der Koppeleinheit geschaltete Batteriezelle besitzen. Die Mehrzahl von Batteriemodulen umfasst ein erstes Batteriemodul mit einer ersten Anzahl Batteriezellen und wenigstens ein zweites Batteriemodul mit einer zweiten Anzahl Batteriezellen, welche größer ist als die erste Anzahl Batteriezellen. Das Verfahren weist wenigstens die folgenden Schritte auf:
a) Abkoppeln der Batteriezellen aller seriengeschalteter Batteriemodule durch Ausgeben eines entsprechenden Steuersignals an die Koppeleinheiten der seriengeschalteten Batteriemodule;
b) ausgangsseitiges Überbrücken aller seriengeschalteten Batteriemodule, so dass eine Ausgangsspannung der Batterie Null wird;
c) Ankoppeln der Batteriezellen des ersten Batteriemoduls und Beenden des ausgangsseitigen Überbrückens des ersten Batteriemoduls durch Beenden des Ausgebens des entsprechenden Steuersignals an die Koppeleinheit des ersten Batteriemoduls;
d) Ankoppeln der Batteriezellen eines der zweiten Batteriemodule und Beenden des ausgangsseitigen Überbrückens des einen der zweiten Batteriemodule durch Beenden des Ausgebens des entsprechenden Steuersignals an die Koppeleinheit des einen der zweiten Batteriemodule;
e) gleichzeitig mit dem Schritt d) Abkoppeln der Batteriezellen des ersten Batteriemoduls durch Ausgeben eines entsprechenden Steuersignals an die Koppeleinheit des ersten Batteriemoduls und ausgangsseitiges Überbrücken des ersten Batteriemoduls; und
f) Wiederholen der Schritte c) bis e), sofern ein weiteres zweites Batteriemodul vorhanden ist, das ausgangsseitig überbrückt ist.

Das Verfahren der Erfindung bietet den Vorteil, dass die Ausgangsspannung der Batterie und damit auch die Spannung des Gleichspannungszwischenkreises schrittweise gesteigert wird, so dass aufgrund der bei jedem Steigerungsschritt verhältnismäßig geringen Spannungsdifferenz zwischen der Ausgangsspannung der Batterie und der Spannung des Gleichspannungszwischenkreises auch verhältnismäßig geringe Ladeströme in den Kondensator des Gleichspannungszwischenkreises fließen, um die Spannung des Gleichspannungszwischenkreises an die Ausgangsspannung der Batterie anzugleichen. Auf diese Weise werden das Ladeschütz 120 und der Ladewiderstand 121 der Batteriesysteme des Standes der Technik überflüssig und Kosten, Volumen und Gewicht eines nach dem erfindungsgemäßen Verfahren arbeitenden Batteriesystems sinken entsprechend.

Das Verfahren der Erfindung besitzt außerdem den Vorteil, dass der Gleichspannungszwischenkreis in einer kürzeren Zeit aufgeladen wird. In einem Batteriesystem mit der in Figur 2 gezeigten Batterie mit Lade- und Trenneinrichtung 116 wird der Gleichspannungszwischenkreis bis zum Schließen des Schützes 118 mit einer Charakteristik geladen, die einer Exponentialfunktion mit negativem Exponenten entspricht. Dies bedeutet, dass zu Beginn des Aufladevorgangs der maximale Aufladestrom fließt, welcher mit fortschreitender Aufladung des Gleichspannungszwischenkreises jedoch immer weiter abnimmt, so dass sich die Spannung des Gleichspannungszwischenkreises asymptotisch dem Wert der Ausgangsspannung der Batterie nähert. Gemäß dem Verfahren der Erfindung wird die Spannung des Gleichspannungszwischenkreises jedoch kontinuierlich schrittweise erhöht, so dass sie einen stufigen Verlauf zeigt, der im Mittel ungefähr linear ist. Die Steigung der gemittelten Spannung des Gleichspannungszwischenkreises entspricht dem durchschnittlichen Ladestrom, welcher über den gesamten Ladevorgang hinweg wenigstens näherungsweise konstant ist, wodurch die erste Sollbetriebsspannung entsprechend schneller erreicht wird.

Erfindungsgemäß werden wenigstens zwei verschiedene Ausführungsvarianten von Batteriemodulen vorgesehen, welche sich durch die Anzahl von Batteriezellen pro Batteriemodul unterscheiden. Ein erstes Batteriemodul, welches gewöhnlich nur einmal vorgesehen ist, besitzt eine geringere Anzahl Batteriezellen als die zweiten Batteriemodule. Dementsprechend ist auch die Ausgangsspannung des ersten Batteriemoduls für sich genommen geringer als jene der zweiten Batteriemodule. Die Höhe der Ausgangsspannung eines zugeschalteten Batteriemoduls bestimmt die anfängliche Spannungsdifferenz zwischen der Ausgangsspannung der Batterie und der Spannung des Gleichspannungszwischenkreises und somit auch den maximalen Ladestrom, der von der Batterie in den Gleichspannungszwischenkreis fließt. Aufgrund der geringeren Ausgangsspannung des ersten Batteriemoduls kann die Spannung des Gleichspannungszwischenkreises in kleineren Schritten erhöht werden, so dass auch der maximale Ladestrom entsprechend sinkt. Die Erfindung erlaubt es somit, den Gleichspannungszwischenkreis durch sukzessives Zuschalten von Batteriemodulen ohne Ladeschütz und Ladewiderstand aufzuladen, gleichzeitig wird aber der Schaltungsaufwand für die Koppeleinheiten der Batteriemodule minimiert, weil in den zweiten Batteriemodulen eine Koppeleinheit eine größere Anzahl von in Serie geschalteten Batteriezellen verwaltet.

Bevorzugt weist das Verfahren einen zusätzlichen Schritt g) der Inbetriebnahme des mit dem Gleichspannungszwischenkreis verbundenen Antriebssystems, wenn die Spannung des Gleichspannungszwischenkreises eine Sollbetriebsspannung erreicht, auf. Die Sollbetriebsspannung kann kleiner als eine Gesamtspannung aller zweiten Batteriemodule oder als eine Gesamtspannung aller zweiten Batteriemodule und des ersten Batteriemoduls sein. In diesem Fall wird das Antriebssystem bereits in Betrieb genommen, bevor die Spannung des Gleichspannungszwischenkreises die maximale Spannung des Gleichspannungszwischenkreises erreicht, und bis zum Erreichen der ersten Sollbetriebsspannung mit verringerter Leistung betrieben.

Bevorzugt werden die Schritte c) bis e) wiederholt, bis die Batteriezellen aller zweiten Batteriemodule angekoppelt, das heißt In Serie geschaltet sind. Die maximale Ausgangsspannung der Batterie korrespondiert mit der maximal möglichen Antriebsleistung des Antriebssystems.

Generell ist die Erfindung nicht auf den Einsatz eines ersten Batteriemoduls und eines oder mehrerer zweiter Batteriemodule beschränkt. Es ist auch vorstellbar, dass weitere Batteriemodule vorgesehen sind, welche unterschiedliche Anzahlen von Batteriezellen aufweisen und in einem entsprechenden Schema an- und abgekoppelt werden, bis eine gewünschte Ausgangsspannung der Batterie und somit eine gewünschte Spannung des Gleichspannungszwischenkreises erreicht sind. Das erste Batteriemodul kann beispielsweise n Batteriezellen aufweisen, ein zweites Batteriemodul 2*n Batteriezellen, ein drittes Batteriemodul 4*n Batteriezellen, ein viertes Batteriemodul 8*n Batteriezellen usw. Dadurch kann ein binäres Schaltschema angewendet werden, wobei die Spannungsdifferenz für jeden Schaltschritt durch die Spannung des ersten Batteriemoduls bestimmt wird. Dabei kann die Zahl n auch 1 betragen, so dass die Ausgangsspannung der Batterie mit minimalen Spannungsschritten einstellbar wird. Die Steuersignale für die Koppeleinheiten können in einem binären Schaltschema einfach durch einen binären Zähler erzeugt werden.

Ein zweiter Aspekt der Erfindung führt eine Batterie mit einer Steuereinheit und einer Mehrzahl von in Serie geschalteten Batteriemodulen ein. Jedes Batteriemodul umfasst dabei eine Koppeleinheit und wenigstens eine zwischen einen ersten Eingang und einen zweiten Eingang der Koppeleinheit geschaltete Batteriezelle. Die Mehrzahl von Batteriemodulen umfasst ein erstes Batteriemodul mit einer ersten Anzahl Batteriezellen und wenigstens ein zweites Batteriemodul mit einer zweiten Anzahl Batteriezellen, welche größer ist als die erste Anzahl Batteriezellen. Die Steuereinheit ist erfindungsgemäß dazu ausgebildet, das Verfahren des ersten Erfindungsaspektes durchzuführen.

Besonders bevorzugt ist die zweite Anzahl doppelt so groß ist wie die erste Anzahl. In diesem Fall kann die Ausgangsspannung der Batterie in gleichmäßigen Schritten erhöht werden.

Die Batteriezellen der Batteriemodule sind vorzugsweise Lithium-Ionen-Batteriezellen. Lithium-Ionen-Batteriezellen besitzen die Vorteile einer hohen Zellspannung und eines hohen Energiegehaltes in einem gegebenen Volumen.

Ein weiterer Erfindungsaspekt betrifft ein Batteriesystem mit einer Batterie, einem mit der Batterie verbundenen Gleichspannungszwischenkreis und einem mit dem Gleichspannungszwischenkreis verbundenen Antriebssystem. Die Batterie ist dabei gemäß dem vorhergehenden Aspekt der Erfindung ausgebildet.

Besonders bevorzugt ist der Gleichspannungszwischenkreis dabei direkt mit der Batterie verbunden, das heißt, es sind keine weiteren Komponenten zwischen der Batterie und dem Gleichspannungszwischenkreis vorgesehen, insbesondere Ladevorrichtung beziehungsweise kein Ladeschütz und kein Ladewiderstand. Bei Ausführungsformen des Batteriesystems können jedoch auch weitere Komponenten wie Stromsensoren zwischen die Batterie und Gleichspannungszwischenkreis geschaltet sein.

Der Gleichspannungszwischenkreis kann einen Kondensator aufweisen oder aus einem Kondensator bestehen.

Ein vierter Aspekt der Erfindung führt ein Kraftfahrzeug mit einem Batteriesystem gemäß dem vorhergehenden Aspekt der Erfindung ein.

### Zeichnungen

Ausführungsbeispiele der Erfindung werden anhand der Zeichnungen und der nachfolgenden Beschreibung näher erläutert, wobei gleiche Bezugszeichen gleiche oder funktional gleichartige Komponenten bezeichnen. Es zeigen:
Figur 1 ein elektrisches Antriebssystem gemäß dem Stand der Technik,
Figur 2 ein Blockschaltbild einer Batterie gemäß dem Stand der Technik,
Figur 3 eine erste Ausführung einer Koppeleinheit zum Einsatz in einer Batterie, mit der das erfindungsgemäße Verfahren ausgeführt werden kann,
Figur 4 eine mögliche schaltungstechnische Umsetzung der ersten Ausführungsform der Koppeleinheit,
Figuren 5A und 5B zwei Ausführungsformen eines Batteriemoduls mit der ersten Ausführungsform der Koppeleinheit,
Figur 6 eine zweite Ausführungsform einer Koppeleinheit zum Einsatz in einer Batterie, mit der das erfindungsgemäße Verfahren ausgeführt werden kann,
Figur 7 eine mögliche schaltungstechnische Umsetzung der zweiten Ausführungsform der Koppeleinheit,
Figur 8 eine Ausführungsform eines Batteriemoduls mit der zweiten Ausführungsform der Koppeleinheit,
Figur 9 eine Batterie, mit der das erfindungsgemäße Verfahren ausgeführt werden kann, und
Figur 10 Verläufe der Spannung des Gleichspannungszwischenkreises für ein Batteriesystem gemäß dem Stand der Technik und eines gemäß der Erfindung.

### Ausführungsformen der Erfindung

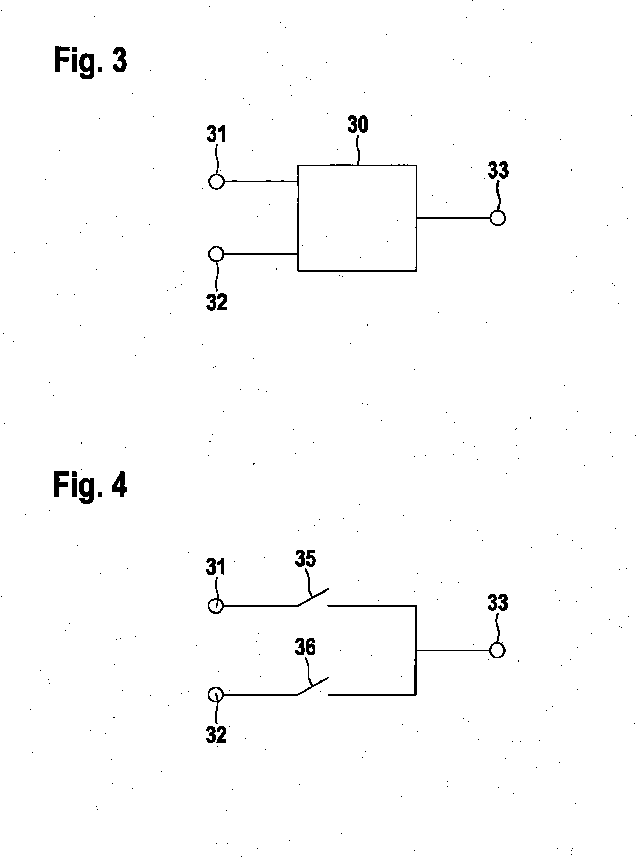

Figur 3 zeigt eine erste Ausführung einer Koppeleinheit 30 zum Einsatz in einer Batterie, mit der das erfindungsgemäße Verfahren ausgeführt werden kann. Die Koppeleinheit 30 besitzt zwei Eingänge 31 und 32 sowie einen Ausgang 33 und ist ausgebildet, einen der Eingänge 31 oder 32 mit dem Ausgang 33 zu verbinden und den anderen abzukoppeln.

Figur 4 zeigt eine mögliche schaltungstechnische Umsetzung der ersten Ausführungsform der Koppeleinheit 30, bei der ein erster und ein zweiter Schalter 35 beziehungsweise 36 vorgesehen sind. Jeder der Schalter ist zwischen einen der Eingänge 31 beziehungsweise 32 und den Ausgang 33 geschaltet. Diese Ausführungsform bietet den Vorteil, dass auch beide Eingänge 31, 32 vom Ausgang 33 abgekoppelt werden können, so dass der Ausgang 33 hochohmig wird, was beispielsweise im Fall einer Reparatur oder Wartung nützlich sein kann. Zudem können die Schalter 35, 36 einfach als Halbleiterschalter wie z. B. MOSFETs oder IGBTs verwirklicht werden. Halbleiterschalter haben den Vorteil eines günstigen Preises und einer hohen Schaltgeschwindigkeit, so dass die Koppeleinheit 30 innerhalb einer geringen Zeit auf eine Steuersignal beziehungsweise eine Änderung des Steuersignals reagieren kann.

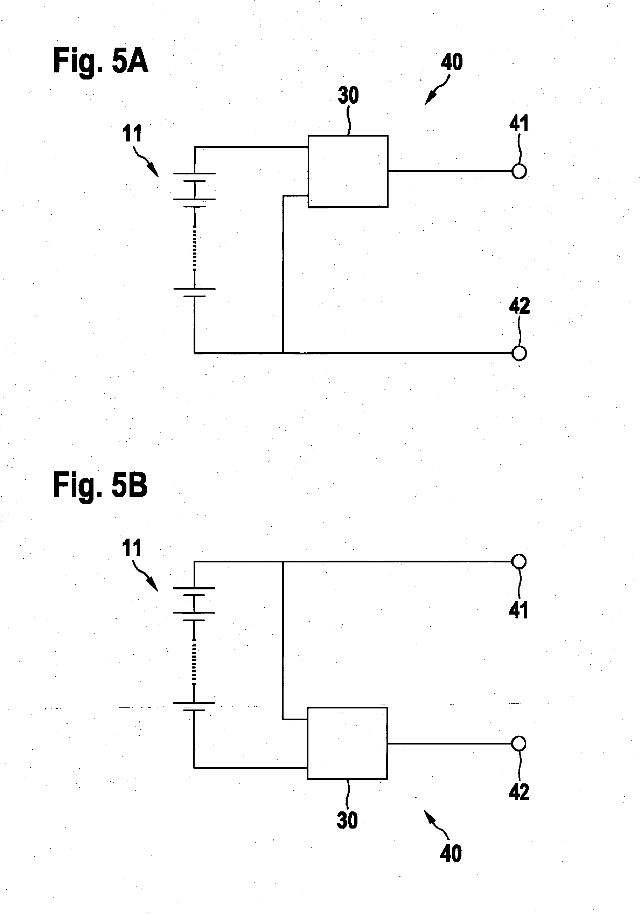

Die Figuren 5A und 5B zeigen zwei Ausführungsformen eines Batteriemoduls 40 mit der ersten Ausführungsform der Koppeleinheit 30. Eine Mehrzahl von Batteriezellen 11 ist zwischen die Eingänge der Koppeleinheit 30 in Serie geschaltet. Die Erfindung ist jedoch nicht auf eine solche Serienschaltung von Batteriezellen 11 beschränkt, es kann auch nur eine einzelne Batteriezelle 11 vorgesehen sein oder aber eine Parallelschaltung oder gemischt-seriell-parallele Schaltung von Batteriezellen 11. Im Beispiel der Figur 5A sind der Ausgang der Koppeleinheit 30 mit einem ersten Terminal 41 und der negative Pol der Batteriezellen 11 mit einem zweiten Terminal 42 verbunden. Es ist jedoch eine beinahe spiegelbildliche Anordnung wie in Figur 5B möglich, bei der der positive Pol der Batteriezellen 11 mit dem ersten Terminal 41 und der Ausgang der Koppeleinheit 30 mit dem zweiten Terminal 42 verbunden sind.

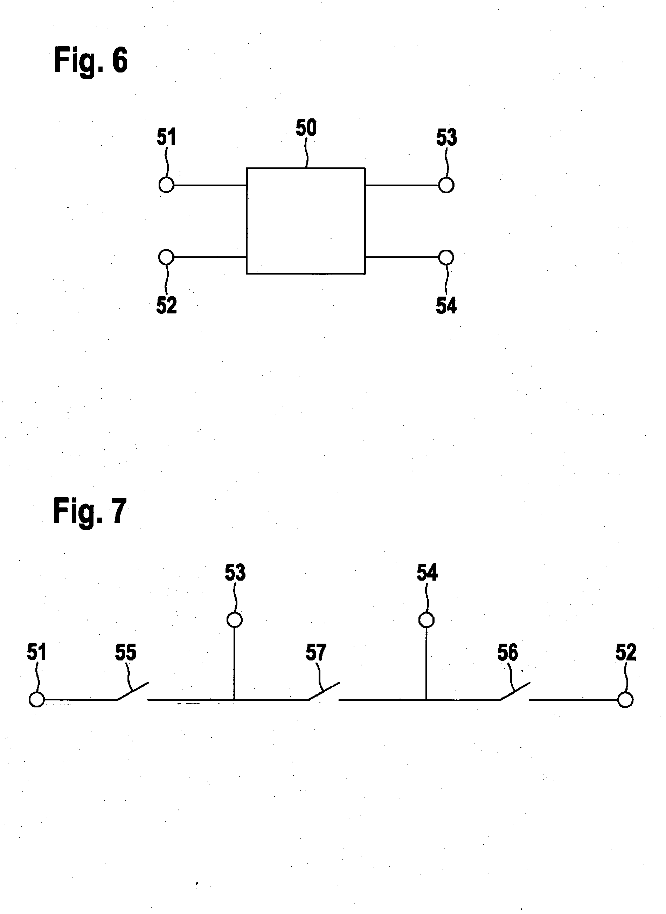

Figur 6 zeigt eine zweite Ausführungsform einer Koppeleinheit 50 zum Einsatz in einer Batterie, mit der das erfindungsgemäße Verfahren ausgeführt werden kann. Die Koppeleinheit 50 besitzt zwei Eingänge 51 und 52 sowie zwei Ausgänge 53 und 54. Sie ist ausgebildet, entweder den ersten Eingang 51 mit dem ersten Ausgang 53 sowie den zweiten Eingang 52 mit dem zweiten Ausgang 54 zu verbinden (und den ersten Ausgang 53 vom zweiten Ausgang 54 abzukoppeln) oder aber den ersten Ausgang 53 mit dem zweiten Ausgang 54 zu verbinden (und dabei die Eingänge 51 und 52 abzukoppeln). Bei bestimmten Ausführungsformen der Koppeleinheit kann diese außerdem ausgebildet sein, beide Eingänge 51, 52 von den Ausgängen 53, 54 abzutrennen und auch den ersten Ausgang 53 vom zweiten Ausgang 54 abzukoppeln. Nicht vorgesehen ist jedoch, sowohl den ersten Eingang 51 mit dem zweiten Eingang 52 zu verbinden.

Figur 7 zeigt eine mögliche schaltungstechnische Umsetzung der zweiten Ausführungsform der Koppeleinheit 50, bei der ein erster, ein zweiter und ein dritter Schalter 55, 56 und 57 vorgesehen sind. Der erste Schalter 55 ist zwischen den ersten Eingang 51 und den ersten Ausgang 53 geschaltet, der zweite Schalter 56 ist zwischen den zweiten Eingang 52 und den zweiten Ausgang 54 und der dritte Schalter 57 zwischen den ersten Ausgang 53 und den zweiten Ausgang 54 geschaltet. Diese Ausführungsform bietet ebenfalls den Vorteil, dass die Schalter 55, 56 und 57 einfach als Halbleiterschalter wie z. B. MOSFETs oder IGBTs verwirklicht werden können. Halbleiterschalter haben den Vorteil eines günstigen Preises und einer hohen Schaltgeschwindigkeit, so dass die Koppeleinheit 50 innerhalb einer geringen Zeit auf eine Steuersignal beziehungsweise eine Änderung des Steuersignals reagieren kann.

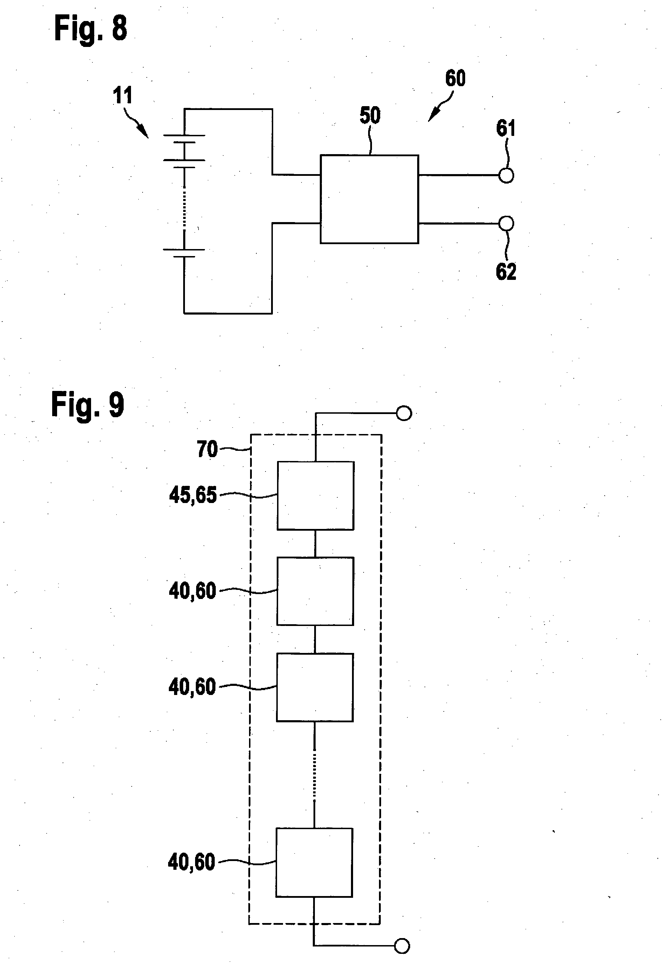

Die Figur 8 zeigt eine Ausführungsform eines Batteriemoduls 60 mit der zweiten Ausführungsform der Koppeleinheit 50. Eine Mehrzahl von Batteriezellen 11 ist zwischen die Eingänge einer Koppeleinheit 50 in Serie geschaltet. Auch diese Ausführungsform des Batteriemoduls 60 ist nicht auf eine solche Serienschaltung von Batteriezellen 11 beschränkt, es kann wiederum auch nur eine einzelne Batteriezelle 11 vorgesehen sein oder aber eine Parallelschaltung oder gemischt-seriell-parallele Schaltung von Batteriezellen 11. Der erste Ausgang der Koppeleinheit 50 ist mit einem ersten Terminal 61 und der zweite Ausgang der Koppeleinheit 40 mit einem zweiten Terminal 62 verbunden. Das Batteriemodul 60 bietet gegenüber dem Batteriemodul 40 der Figuren 5A und 5B den Vorteil, dass die Batteriezellen 11 durch die Koppeleinheit 50 von der restlichen Batterie beidseitig abgekoppelt werden können, was einen gefahrlosen Austausch im laufenden Betrieb ermöglicht, da an keinem Pol der Batteriezellen 11 die gefährliche hohe Summenspannung der restlichen Batteriemodule der Batterie anliegt.

Figur 9 zeigt eine Ausführungsform einer Batterie, mit der das erfindungsgemäße Verfahren ausgeführt werden kann. Die Batterie weist einen Batteriemodulstrang 70 mit einer Mehrzahl von Batteriemodulen 40 oder 60 auf, wobei vorzugsweise jedes Batteriemodul 40 oder 60 dieselbe Anzahl von Batteriezellen 11 in identischer Weise verschaltet enthält. Zusätzlich zu den Batteriemodulen 40 oder 60 ist ein zusätzliches Batteriemodul 45 oder 65 vorgesehen, welches wie die Batteriemodule 40 beziehungsweise 60 aufgebaut ist, sich jedoch von jenen dadurch unterscheidet, dass die Anzahl der Batteriezellen 11 in dem zusätzlichen Batteriemodul 45, 65 geringer ist als in den Batteriemodulen 40, 60. Das zusätzliche Batteriemodule 45, 65 wird in der Figur 9 an oberster Stelle gezeigt, kann jedoch an einer beliebigen Stelle des Batteriemodulstranges 70 angeordnet werden.

Generell kann der Batteriemodulstrang 70 jede Zahl von Batteriemodulen 40 oder 60 enthalten. Auch können an den Polen des Batteriemodulstranges 70 zusätzlich Lade- und Trenneinrichtungen und Trenneinrichtungen wie bei Figur 2 vorgesehen sein, wenn Sicherheitsbestimmungen dies erfordern. Allerdings sind solche Trenneinrichtungen erfindungsgemäß nicht notwendig, weil eine Abkopplung der Batteriezellen 11 von den Batterieanschlüssen durch die in den Batteriemodulen 40 oder 60 enthaltenen Koppeleinheiten 30 oder 50 erfolgen kann.

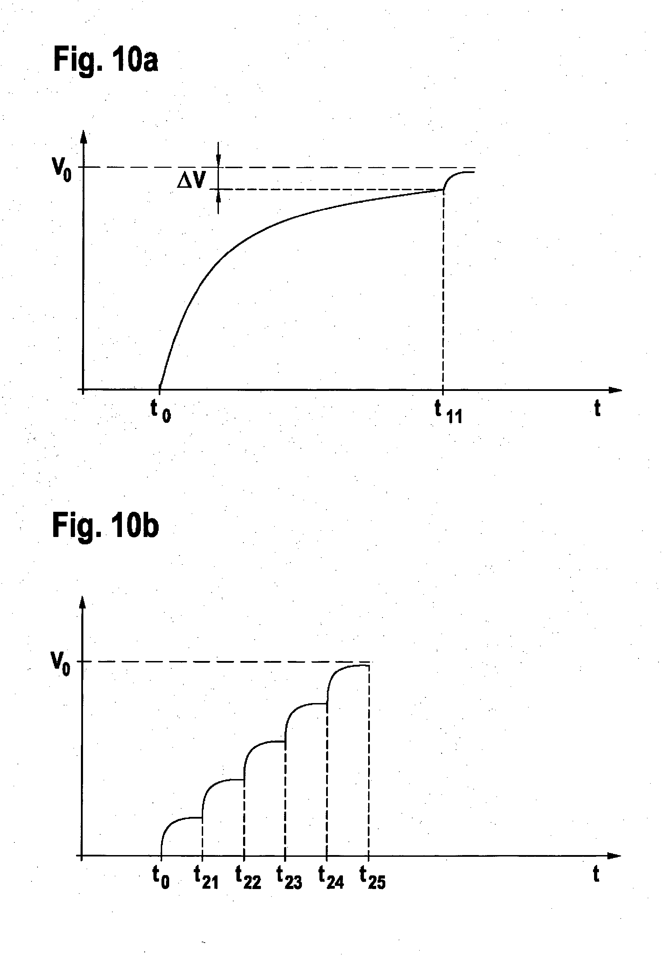

Figur 10 zeigt Verläufe der Spannung des Gleichspannungszwischenkreises für ein Batteriesystem gemäß dem Stand der Technik und eines gemäß der Erfindung.

Die Teilabbildung a) zeigt den Verlauf für ein Batteriesystem gemäß dem Stand der Technik. Zum Zeitpunkt t₀ wird die Batterie über das Ladeschütz 120 und den Ladewiderstand 121 an den Kondensator 111 des Gleichspannungszwischenkreises angelegt, wobei letzterer zu diesem Zeitpunkt vollständig entladen ist. Die Spannung des Gleichspannungszwischenkreises steigt anfangs schnell, die Steigung nimmt dann jedoch fortlaufend ab. Erst zum Zeitpunkt t₁₁ ist die Spannung des Gleichspannungszwischenkreises so hoch, dass die Differenz ΔV zwischen der Ausgangsspannung der Batterie und der Spannung des Gleichspannungszwischenkreises gering genug ist, um das Schütz 118 zu schließen und den Gleichspannungszwischenkreis ohne Strombegrenzung durch den Ladewiderstand 121 schnell bis auf die Ausgangsspannung der Batterie aufzuladen.

Die Teilabbildung b) zeigt den entsprechenden Verlauf für ein Batteriesystem gemäß der Erfindung. Zu Beginn des Ladevorganges beträgt die Spannung des Gleichspannungszwischenkreises wiederum Null, das heißt, der Kondensator des Gleichspannungszwischenkreises ist voll entladen. Zum Zeitpunkt t₀ wird das erste Batteriemodul aktiviert, so dass die Ausgangsspannung der Batterie der Spannung des ersten Batteriemoduls mit der ersten Anzahl Batteriezellen entspricht. Der Ladestrom wird nicht durch einen Ladewiderstand begrenzt, so dass die Spannung des Gleichspannungszwischenkreises schnell ansteigt, der Ladestrom wird jedoch nicht unzulässig hoch, weil die Spannungsdifferenz zwischen der Ausgangsspannung der Batterie und der Spannung des Gleichspannungszwischenkreises verhältnismäßig gering ist. Sobald die Spannung des Gleichspannungszwischenkreises nahe an der Ausgangsspannung des ersten Batteriemoduls ist (Zeitpunkt t₂₁), wird ein zweites Batteriemodul mit der höheren zweiten Anzahl Batteriezellen aktiviert und gleichzeitig das erste Batteriemodul wieder deaktiviert, wodurch die Ausgangsspannung der Batterie auf die Spannung des aktivierten zweiten Batteriemoduls und um die Differenz zwischen der Spannung des aktivierten zweiten Batteriemoduls minus der des ersten Batteriemoduls zunimmt. Die Spannung des Gleichspannungszwischenkreises folgt wiederum schnell der Ausgangsspannung der Batterie. Zum Zeitpunkt t₂₂ wird wiederum das erste Batteriemodul zusätzlich zu dem bereits aktivierten zweiten Batteriemodul aktiviert. Wenn sich die Spannung des Gleichspannungszwischenkreises wieder entsprechend erhöht hat (Zeitpunkt t₂₃), wird wiederum ein zweites Batteriemodul zugeschaltet und gleichzeitig das erste Batteriemodul desaktiviert. Das Zuschalten jeweils eines weiteren zweiten Batteriemoduls und alternierende Aktivieren und Deaktivieren des ersten Batteriemoduls wird nun so lange wiederholt, bis die Spannung des Gleichspannungszwischenkreises die Sollbetriebsspannung erreicht beziehungsweise alle zweiten Batteriemodule (sowie eventuell zusätzlich das erste Batteriemodul) aktiviert sind. Im gezeigten Beispiel besitzt die Batterie zwei zweite Batteriemodule, es sind jedoch natürlich beliebige Zahlen von zweiten Batteriemodulen größer oder gleich 1 möglich.

Der Vergleich der beiden Verläufe der Spannung des Gleichspannungszwischenkreises belegt, dass der Gleichspannungszwischenkreis gemäß der Erfindung deutlich schneller aufgeladen wird als im Stand der Technik üblich. Dadurch kann ein an den Gleichspannungszwischenkreis angeschlossenes Antriebssystem schneller in Betrieb gehen, was insbesondere für sicherheitsrelevante Anwendungen interessant ist.

## Patentansprüche

1. Ein Verfahren zur Inbetriebnahme eines Batteriesystems mit einer Batterie, einem mit der Batterie verbundenen Gleichspannungszwischenkreis und einem mit dem Gleichspannungszwischenkreis verbundenen Antriebssystem, wobei die Batterie mit eine Mehrzahl von in Serie geschalteten Batteriemodulen (40, 60), welche jeweils eine Koppeleinheit (30, 50) und wenigstens eine zwischen einen ersten Eingang (31, 51) und einen zweiten Eingang (32, 52) der Koppeleinheit (30, 50) geschaltete Batteriezelle (11) umfassen, wobei die Mehrzahl von Batteriemodulen (40, 60) ein erstes Batteriemodul (40, 60) mit einer ersten Anzahl Batteriezellen (11) und wenigstens ein zweites Batteriemodul (40, 60) mit einer zweiten Anzahl Batteriezellen (11), welche größer ist als die erste Anzahl Batteriezellen (11), umfasst, das Verfahren wenigstens die folgenden Schritte aufweisend:
a) Abkoppeln der Batteriezellen (11) aller seriengeschalteter Batteriemodule (40, 60) durch Ausgeben eines entsprechenden Steuersignals an die Koppeleinheiten (30, 50) der seriengeschalteten Batteriemodule (40, 60);
b) ausgangsseitiges Überbrücken aller seriengeschalteten Batteriemodule (40, 60), so dass eine Ausgangsspannung der Batterie Null wird;
c) Ankoppeln der Batteriezellen (11) des ersten Batteriemoduls (40, 60) und Beenden des ausgangsseitigen Überbrückens des ersten Batteriemoduls (40, 60) durch Beenden des Ausgebens des entsprechenden Steuersignals an die Koppeleinheit (30, 50) des ersten Batteriemoduls (40, 60);
d) Ankoppeln der Batteriezellen (11) eines der zweiten Batteriemodule (40, 60) und Beenden des ausgangsseitigen Überbrückens des einen der zweiten Batteriemodule (40, 60) durch Beenden des Ausgebens des entsprechenden Steuersignals an die Koppeleinheit (30, 50) des einen der zweiten Batteriemodule (40, 60);
e) gleichzeitig mit dem Schritt d) Abkoppeln der Batteriezellen (11) des ersten Batteriemoduls (40, 60) durch Ausgeben eines entsprechenden Steuersignals an die Koppeleinheit (30, 50) des ersten Batteriemoduls (40, 60) und ausgangsseitiges Überbrücken des ersten Batteriemoduls (40, 60); und
f) Wiederholen der Schritte c) bis e), sofern ein weiteres zweites Batteriemoduls (40, 60) vorhanden ist, das ausgangsseitig überbrückt ist.

2. Das Verfahren gemäß Anspruch 1, mit einem zusätzlichen Schritt g) der Inbetriebnahme des mit dem Gleichspannungszwischenkreis verbundenen Antriebssystems, wenn die Spannung des Gleichspannungszwischenkreises eine Sollbetriebsspannung erreicht.

3. Das Verfahren gemäß dem vorhergehenden Anspruch, bei dem die Sollbetriebsspannung geringer ist als eine Gesamtspannung aller zweiten Batteriemodule (40, 60) oder als eine Gesamtspannung aller zweiten Batteriemodule (40, 60) und des ersten Batteriemoduls (40, 60).

4. Das Verfahren gemäß einem der vorhergehenden Ansprüche, bei dem die Schritte c) bis e) wiederholt werden, bis die Batteriezellen aller zweiten Batteriemodule (40, 60) angekoppelt sind.

5. Eine Batterie mit einer Steuereinheit und einer Mehrzahl von in Serie geschalteten Batteriemodulen (40, 60), wobei jedes Batteriemodul (40, 60) eine Koppeleinheit (30, 50) und wenigstens eine zwischen einen ersten Eingang (31, 51) und einen zweiten Eingang (32, 52) der Koppeleinheit (30, 50) geschaltete Batteriezelle (11) umfasst, wobei die Mehrzahl von Batteriemodulen (40, 60) ein erstes Batteriemodul (40, 60) mit einer ersten Anzahl Batteriezellen (11) und wenigstens ein zweites Batteriemodul (40, 60) mit einer zweiten Anzahl Batteriezellen (11), welche größer ist als die erste Anzahl Batteriezellen (11), umfasst, **dadurch gekennzeichnet, dass** die Steuereinheit ausgebildet ist, das Verfahren gemäß einem der vorhergehenden Ansprüche durchzuführen.

6. Die Batterie gemäß dem vorhergehenden Anspruch, **dadurch gekennzeichnet, dass** die zweite Anzahl doppelt so groß ist wie die erste Anzahl.

7. Ein Batteriesystem mit einer Batterie, einem mit der Batterie verbundenen Gleichspannungszwischenkreis und einem mit dem Gleichspannungszwischenkreis verbundenen Antriebssystem, **dadurch gekennzeichnet, dass** die Batterie gemäß einem der Ansprüche 5 oder 6 ausgebildet ist.

8. Das Batteriesystem gemäß dem vorhergehenden Anspruch, bei dem der Gleichspannungszwischenkreis direkt mit der Batterie verbunden ist.

9. Das Batteriesystem gemäß einem der beiden vorhergehenden Ansprüche, bei dem der Gleichspannungszwischenkreis einen Kondensator aufweist oder aus einem Kondensator besteht.

10. Ein Kraftfahrzeug mit einem Batteriesystem gemäß einem der Ansprüche 7 bis 9.

## Claims

1. Method for starting up a battery system having a battery, a DC voltage intermediate circuit that is connected to the battery, and a drive system that is connected to the DC voltage intermediate circuit, wherein the battery is provided with a plurality of battery modules (40, 60) that are connected in series and comprise in each case a coupling unit (30, 50) and at least one battery cell (11) that is connected between a first input (31, 51) and a second input (32, 52) of the coupling unit (30, 50), wherein the plurality of battery modules (40, 60) comprises a first battery module (40, 60) having a first number of battery cells (11) and at least a second battery module (40, 60) having a second number of battery cells (11), said second number of battery cells being greater than the first number of battery cells (11), said method comprising at least the following steps:
a) Disconnect the battery cells (11) of all the series-connected battery modules (40, 60) by transmitting a corresponding control signal to the coupling units (30, 50) of the series-connected battery modules (40, 60);
b) Provide a bridge on the output side of all the series-connected battery modules (40, 60) so that an output voltage of the battery is zero;
c) Connect the battery cells (11) of the first battery module (40, 60) and terminate the bridge on the output side of the first battery module (40, 60) by terminating the transmission of the corresponding control signal to the coupling unit (30, 50) of the first battery module (40, 60);
d) Connect the battery cells (11) of one of the second battery modules (40, 60) and terminate the bridge on the output side of one of the second battery modules (40, 60) by terminating the transmission of the corresponding control signal to the coupling unit (30, 50) of one of the second battery modules (40, 60);
e) Simultaneously with step d) disconnect the battery cells (11) of the first battery module (40, 60) by transmitting a corresponding control signal to the coupling unit (30, 50) of the first battery module (40, 60) and provide a bridge on the output side of the first battery module (40, 60); and
f) Repeat steps c) to e) provided that a further second battery module (40, 60) that is bridged on the output side is available.

2. Method according to Claim 1, having an additional step g) of starting up the drive system that is connected to the DC voltage intermediate circuit if the voltage of the DC voltage intermediate circuit achieves a desired operating voltage.

3. Method according to the preceding claim, wherein the desired operating voltage is less than a total voltage of all the second battery modules (40, 60) or less than a total voltage of all the second battery modules (40, 60) and the first battery module (40, 60).

4. Method according to any one of the preceding claims, wherein the steps c) to e) are repeated until the battery cells of all the second battery modules (40, 60) are connected.

5. Battery comprising a control unit and a plurality of battery modules (40, 60) that are connected in series, wherein each battery module (40, 60) comprises a coupling unit (30, 50) and at least one battery cell (11) that is connected between a first input (31, 51) and a second input (32, 52) of the coupling unit (30, 50), wherein the plurality of battery modules (40, 60) comprises a first battery module (40, 60) having a first number of battery cells (11) and at least a second battery module (40, 60) having a second number of battery cells (11), said second number of battery cells being greater than the first number of battery cells (11), **characterized in that** the control unit is embodied to perform the method according to any one of the preceding claims.

6. Battery according to the preceding claim, **characterized in that** the second number is twice as high as the first number.

7. Battery system having a battery, a DC voltage intermediate circuit that is connected to the battery, and a drive system that is connected to the DC voltage intermediate circuit, **characterized in that** the battery is embodied according to any one of Claims 5 or 6.

8. Battery system according to the preceding claim, wherein the DC voltage intermediate circuit is connected directly to the battery.

9. Battery system according to any one of the two preceding claims, wherein the DC voltage intermediate circuit comprises a capacitor or is embodied as a capacitor.

10. Motor vehicle having a battery system according to any one of Claims 7 to 9.

## Revendications

1. Procédé de mise en service d'un système de batterie comprenant une batterie, un circuit intermédiaire à tension continue connecté à la batterie et un système d'entraînement connecté au circuit intermédiaire à tension continue, la batterie étant pourvue d'une pluralité de modules de batterie (40, 60) branchés en série, lesquels comportent respectivement une unité de couplage (30, 50) et au moins une cellule de batterie (11) branchée entre une première entrée (31, 51) et une deuxième entrée (32, 52) de l'unité de couplage (30, 50), la pluralité de modules de batterie (40, 60) comportant un premier module de batterie (40, 60) pourvu d'un premier nombre de cellules de batterie (11) et au moins un deuxième module de batterie (40, 60) pourvu d'un deuxième nombre de cellules de batterie (11), lequel est supérieur au premier nombre de cellules de batterie (11), le procédé comprenant au moins les étapes suivantes :
a) déconnexion des cellules de batterie (11) de tous les modules de batterie (40, 60) branchés en série en délivrant un signal de commande correspondant aux unités de couplage (30, 50) des modules de batterie (40, 60) branchés en série ;
b) pontage côté sortie de tous les modules de batterie (40, 60) branchés en série, de telle sorte qu'une tension de sortie de la batterie soit nulle ;
c) raccordement des cellules de batterie (11) du premier module de batterie (40, 60) et terminaison du pontage côté sortie du premier module de batterie (40, 60) en terminant la délivrance du signal de commande correspondant à l'unité de couplage (30, 50) du premier module de batterie (40, 60) ;
d) raccordement des cellules de batterie (11) de l'un des deuxièmes modules de batterie (40, 60) et terminaison du pontage côté sortie de l'un des deuxièmes modules de batterie (40, 60) en terminant la délivrance du signal de commande correspondant à l'unité de couplage (30, 50) de l'un des deuxièmes modules de batterie (40, 60) ;
e) simultanément à l'étape d), déconnexion des cellules de batterie (11) du premier module de batterie (40, 60) en délivrant un signal de commande correspondant à l'unité de couplage (30, 50) du premier module de batterie (40, 60) et pontage côté sortie du premier module de batterie (40, 60) ; et
f) répétition des étapes c) à e), pourvu qu'un deuxième module de batterie (40, 60) supplémentaire, qui est ponté côté sortie, soit présent.

2. Procédé selon la revendication 1, comprenant une étape supplémentaire g) de mise en service du système d'entraînement connecté au circuit intermédiaire à tension continue, lorsque la tension du circuit intermédiaire à tension continue atteint une tension de service de consigne.

3. Procédé selon la revendication précédente, dans lequel la tension de service de consigne est inférieure à une tension totale de tous les deuxièmes modules de batterie (40, 60) ou à une tension totale de tous les deuxièmes modules de batterie (40, 60) et du premier module de batterie (40, 60).

4. Procédé selon l'une quelconque des revendications précédentes, dans lequel les étapes c) à e) sont répétées jusqu'à ce que les cellules de batterie de tous les deuxièmes modules de batterie (40, 60) soit raccordées.

5. Batterie comprenant une unité de commande et une pluralité de modules de batterie (40, 60) branchés en série, chaque module de batterie (40, 60) comportant une unité de couplage (30, 50) et au moins une cellule de batterie (11) branchée entre une première entrée (31, 51) et une deuxième entrée (32, 52) de l'unité de couplage (30, 50), la pluralité de modules de batterie (40, 60) comportant un premier module de batterie (40, 60) pourvu d'un premier nombre de cellules de batterie (11) et au moins un deuxième module de batterie (40, 60) pourvu d'un deuxième nombre de cellules de batterie (11), lequel est supérieur au premier nombre de cellules de batterie (11), **caractérisée en ce que** l'unité de commande est conçue pour mettre en oeuvre le procédé selon l'une quelconque des revendications précédentes.

6. Batterie selon la revendication précédente, **caractérisée en ce que** le deuxième nombre est deux fois plus grand que le premier nombre.

7. Système de batterie comprenant une batterie, un circuit intermédiaire à tension continue connecté à la batterie et un système d'entraînement connecté au circuit intermédiaire à tension continue, **caractérisé en ce que** la batterie est réalisée selon l'une des revendications 5 et 6.

8. Système de batterie selon la revendication précédente, dans lequel le circuit intermédiaire à tension continue est connecté directement à la batterie.

9. Système de batterie selon l'une des deux revendications précédentes, dans lequel le circuit intermédiaire à tension continue comprend un condensateur ou est constitué d'un condensateur.

10. Véhicule comprenant un système de batterie selon l'une des revendications 7 à 9.
